(19)

Europäisches Patentamt
European Patent Office
Office européen des brevets

(11) **EP 2 871 261 A1**

(12) **EUROPEAN PATENT APPLICATION**
published in accordance with Art. 153(4) EPC

(43) Date of publication:
**13.05.2015 Bulletin 2015/20**

(21) Application number: **13813218.8**

(22) Date of filing: **01.07.2013**

(51) Int Cl.:
**C23C 24/04** (2006.01)   **F16L 1/00** (2006.01)

(86) International application number:
**PCT/JP2013/068078**

(87) International publication number:
**WO 2014/007227 (09.01.2014 Gazette 2014/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.07.2012 JP 2012149973**

(71) Applicant: **NHK Spring Co., Ltd.**
**Yokohama-shi, Kanagawa 236-0004 (JP)**

(72) Inventors:
• **MORI, Shogo**
**Yokohama-shi**
**Kanagawa 236-0004 (JP)**

• **YAMAUCHI, Yuichiro**
**Yokohama-shi**
**Kanagawa 236-0004 (JP)**
• **AKABAYASHI, Masaru**
**Yokohama-shi**
**Kanagawa 236-0004 (JP)**

(74) Representative: **Hoffmann Eitle**
**Patent- und Rechtsanwälte PartmbB**
**Arabellastraße 30**
**81925 München (DE)**

(54) **STRUCTURE WITH EMBEDDED PIPE AND MANUFACTURING METHOD THEREFOR**

(57)    Provided is a pipe buried structure with improved adhesiveness between a pipe forming a flow path and a metal member, and a method of manufacturing the same. A pipe buried structure 1 is provided with a pipe 10 made of metal or alloy, an outer periphery on a cross section of which has a flattened shape obtained by curving both ends in a longitudinal direction, a base material 11 made of metal or alloy on which a concave portion 11a is formed, the portion including an inner wall which an outer peripheral portion 10c in the longitudinal direction abuts and to which the pipe 10 is fitted, and a deposition layer 12 formed by accelerating powder made of metal or alloy together with gas and spraying the same in a solid phase state on surfaces of the pipe 10 and the base material 11, thereby depositing the powder in a state in which the pipe 10 is fitted to the concave portion 11a, wherein a ratio h/R between a protruding amount h by which the pipe 10 protrudes from the surface of the base material 11 and a curvature R at ends 10a and 10b is not smaller than 0.25 and not larger than 0.5.

FIG.1

EP 2 871 261 A1

# Description

Field

The present invention relates to a pipe buried structure obtained by burying, in a metal member, a pipe in which a temperature adjusting medium such as cooling gas and cooling water is allowed to circulate and a method of manufacturing the same.

Background

A structure obtained by burying, in a metal member, a pipe in which fluid is allowed to circulate (hereinafter, referred to as a pipe buried structure) is used for various applications in a manufacturing process and the like of a product such as a semiconductor, a liquid crystal display device, and an optical disc. For example, the pipe buried structure in which a heat medium (cooling medium) is allowed to circulate in the pipe is used as a temperature adjusting device (such as a cold plate) for adjusting temperature of (cooling or heating) a base material (for example, refer to Patent Literature 1). There also is a case in which the pipe buried structure in which gas including a predetermined component is allowed to circulate in a flow path is used as a shower plate for supplying the gas to the base material.

Such pipe buried structure is conventionally manufactured by forming the pipe in which the fluid is allowed to circulate and the metal member on which a concave portion having a shape corresponding to the pipe is formed by digging and the like and fitting the pipe to the concave portion of the metal member.

Recently, technology to bury the pipe in the metal member by a so-called cold spraying method of forming a structure by spraying metal powder in a solid phase state to a base material and depositing the metal on the base material is also suggested (for example, refer to Patent Literature 2).

Citation List

Patent Literature

Patent Literature 1: Japanese Laid-open Patent Publication No. 2009-13497
Patent Literature 2: Japanese Laid-open Patent Publication No. 2011-238705

Summary

Technical Problem

In the pipe buried structure, when there is a gap between the pipe and the metal member, thermal resistance increases and thermal conductivity and thermal uniformity between the fluid circulating in the pipe and the metal member are deteriorated. A foreign material might enter the gap between them and backlash of the pipe might occur in the concave portion due to the gap. However, in a method of simply fitting the pipe to the concave portion provided on the metal member, it is difficult to join them in a closely adhered manner such that there is no gap between an inner wall of the concave portion and an outer wall of the pipe.

In this point, it is possible to deposit a minute metal film around the pipe by the cold spraying method, so that the structure excellent in thermal conductivity may be formed. However, in this case also, adhesiveness of the metal film to the pipe might be deteriorated due to a local gap around the pipe depending on a condition such as a shape of the pipe and an angle at which the metal powder is sprayed to the pipe and the base material.

The present invention is achieved in view of the above, and an object thereof is to provide the pipe buried structure with improved adhesiveness between the pipe forming the flow path and the metal member and the method of manufacturing the same.

Solution to Problem

To solve the above-described problem and achieve the object, a pipe buried structure according to the present invention includes: a pipe made of metal or alloy, an outer periphery on a cross section of the pipe having a flattened shape obtained by curving both ends in a longitudinal direction; a base material made of metal or alloy including a concave portion to which the pipe is fitted, the concave portion having an inner wall which abuts a portion corresponding to the longitudinal direction of the outer periphery; and a deposition layer formed by accelerating powder made of metal or alloy together with gas to spray and deposit the powder in a solid phase state on surfaces of the pipe and the base material in a state in which the pipe is fitted to the concave portion, wherein a ratio h/R between a protruding amount h by which the pipe protrudes from the surface of the base material and a curvature R at the both ends is not smaller than 0.25 and not larger than 0.5.

In the pipe buried structure, a clearance between the concave portion and the pipe on the cross section is not smaller than 0 mm and not larger than 0.05 mm.

In the pipe buried structure, the pipe is made of stainless steel, a copper alloy, a nickel alloy, tantalum, niobium, titanium, aluminum, or an aluminum alloy.

In the pipe buried structure, the base material is made of copper, a copper alloy, aluminum or an aluminum alloy.

In the pipe buried structure, the powder is made of copper or aluminum.

A method of manufacturing a pipe buried structure according to the present invention includes: a base material forming step of forming a concave portion on a base material made of metal or alloy, the concave portion including an inner wall which abuts a portion corresponding to a longitudinal direction of an outer periphery of a pipe made of metal or alloy, the outer periphery on a cross section of the pipe having a flattened shape obtained by curving both ends in the longitudinal direction; and a deposition layer forming step of fitting the pipe to the concave portion, accelerating powder made of metal or alloy together with gas, and forming a deposition layer by spraying and depositing the powder in a solid phase state on surfaces of the pipe and the base material, wherein the base material forming step sets a ratio h/R between a protruding amount h by which the pipe protrudes from the surface of the base material and a curvature R at the both ends to be not smaller than 0.25 and not larger than 0.5.

In the method of manufacturing a pipe buried structure, the base material forming step sets a clearance between the concave portion and the pipe on the cross section of the pipe to be not smaller than 0 mm and not larger than 0.05 mm.

Advantageous Effects of Invention

According to the present invention, the concave portion with the ratio h/R between the protruding amount h of the pipe forming the flow path from the base material and the curvature R of the outer periphery of the pipe not smaller than 0.25 and not larger than 0.5 is formed on the base material, the pipe is fitted to the concave portion, and the deposition layer is formed on the surfaces of the pipe and the base material by a so-called cold spraying method, so that it becomes possible to form the minute deposition layer around the pipe protruding from the base material, thereby improving the adhesiveness between the pipe and the metal member.

Brief Description of Drawings

FIG. 1 is a cross-sectional view illustrating a structure of a pipe buried structure according to an embodiment of the present invention.
FIG. 2 is a flowchart illustrating a method of manufacturing the pipe buried structure illustrated in FIG. 1.
FIG. 3A is a schematic diagram for illustrating step S1 illustrated in FIG. 2.
FIG. 3B is a schematic diagram for illustrating step S2 illustrated in FIG. 2.
FIG. 3C is a schematic diagram for illustrating step S3 illustrated in FIG. 2.
FIG. 4 is a schematic diagram illustrating an overview of a cold spraying device.
FIG. 5 is an SEM image illustrating a deposition layer in an example 1.
FIG. 6 is an SEM image illustrating a deposition layer in an example 2.

FIG. 7 is an SEM image illustrating a deposition layer in a comparative example 1.
FIG. 8 is an SEM image illustrating a deposition layer in a comparative example 2.
FIG. 9 is an optical photograph illustrating a deposition layer in an example 3.
FIG. 10 is an optical photograph illustrating a deposition layer in an example 4.
FIG. 11 is an optical photograph illustrating a deposition layer in a comparative example 3.

Description of Embodiments

Embodiments for carrying out the present invention are hereinafter described in detail with reference to the drawings. Meanwhile, the present invention is not limited by the following embodiments. The drawings referred to in the following description merely schematically illustrate shapes, sizes, and a positional relationship such that the contents of the present invention may be understood. That is to say, the present invention is not limited only to the shapes, sizes, and positional relationship illustrated in the drawings.

(Embodiment)

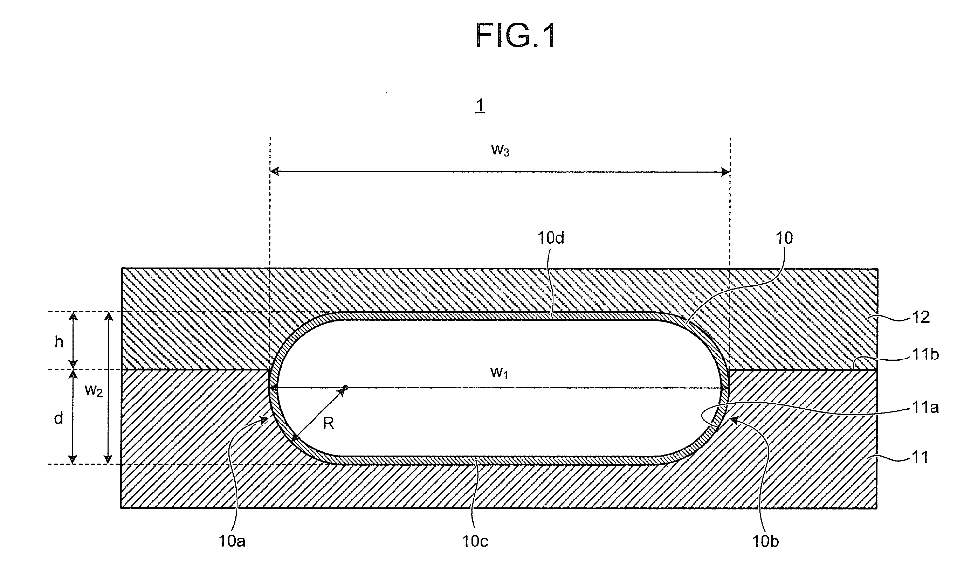

FIG. 1 is a cross-sectional view illustrating a structure of a pipe buried structure according to an embodiment of the present invention. As illustrated in FIG. 1, a pipe buried structure 1 according to this embodiment is provided with a pipe 10 made of metal or alloy, a base material 11 made of metal or alloy on which formed a concave portion 11a to which the pipe 10 is fitted, and a deposition layer 12 made of metal or alloy formed on the pipe 10 and the base material 11. Such pipe buried structure 1 is used as a temperature adjusting device (for example, a cold plate), a fluid supplying device (for example, a shower plate) and the like with desired fluid (liquid or gas) allowed to circulate in the pipe 10.
An outer periphery on a cross section of the pipe 10 has a flattened shape obtained by curving ends 10a and 10b in a longitudinal direction. In this embodiment, outer peripheral portions 10c and 10d in the longitudinal direction interposed between the ends 10a and 10b are linearly shaped. Meanwhile, the outer peripheral portions 10c and 10d in the longitudinal direction are not necessary linearly shaped. For example, it is also possible to curve the outer peripheral portion 10c in the longitudinal direction so as to have a curvature larger than that of the ends 10a and 10b such that an entire outer periphery has an elliptical shape. Hereinafter, a width in the longitudinal direction of the pipe 10 on the cross section is set to $w_1$ and the width in a lateral direction thereof is set to $w_2$. Meanwhile, a thickness of the pipe 10 is appropriately determined according to a material and an application thereof.
A shape in the longitudinal direction (direction in which the fluid is allowed to circulate) of the pipe 10 is not especially limited and a planar shape of the pipe 10 seen from above the pipe buried structure 1 may be various shapes such as a linear shape, a spiral shape, and a meandering shape.

The material of the pipe 10 is selected according to the fluid allowed to circulate in the pipe 10 and the application of the pipe buried structure 1. For example, when corrosive liquid or gas is allowed to circulate, anticorrosion metal or alloy such as stainless steel, a copper alloy, a nickel alloy, tantalum, niobium, and titanium is used. When urban water or sea water is allowed to circulate as cooling water, a material having excellent thermal conductivity such as stainless steel is used among the above-described materials. In contrast, when PCW (process cooling water), organic solvent, inert gas and the like are allowed to circulate, corrosion resistance is not required and it is also possible to use aluminum or an aluminum alloy excellent in thermal conductivity.

The base material 11 is a bulk material made of metal or alloy having the excellent thermal conductivity such as copper, the copper alloy, aluminum, or the aluminum alloy, for example. An upper surface 11b of the base material 11 is dug to obtain a groove shape to form the concave portion 11a. Meanwhile, a planar shape on the upper surface 11b of the concave portion 11a corresponds to the planar shape of the pipe 10.

The concave portion 11a has an inner wall which a part of the outer periphery of the pipe 10 abuts. The inner wall of the concave portion 11a has a shape running along one outer peripheral portion 10c in the longitudinal direction and the ends 10a and 10b on a cross section. A depth d of the concave portion 11a is defined such that a ratio $h/R$ between a height by which the pipe 10 protrudes from the upper surface 11b (hereinafter, referred to as a protruding amount) $h$ ($h = w_2 - d$) and a curvature $R$ at the ends 10a and 10b of the pipe 10 is not smaller than 0.25 and not larger than 0.5. The concave portion 11a has a width that reaches a maximum value $w_3$ ($w_3 \approx w_1$) at the height corresponding to the curvature $R$ with respect to a bottom surface of the concave portion 11a and opens while maintaining the maximum value $w_3$ from there upward. Furthermore, a clearance $w_3 - w_1$ between the concave portion 11a and the pipe 10 is set within a range not smaller than 0 mm and not larger than 0.05 mm.

The deposition layer 12 is formed by a so-called cold spraying method. Herein, the cold spraying method is a film forming method of accelerating powder made of metal or alloy together with gas and spraying the same in a solid phase state on a surface of a base body (pipe 10 and base material 11 in this embodiment), thereby depositing the powder. The deposition layer 12 formed by the cold spraying method has no phase transformation and oxidation thereof is inhibited, so that this has high thermal conductivity. At the time of collision with the base body or the film previously deposited on the base body, plastic deformation occurs between the powder and the base body and an anchor effect is obtained, and at the same time, oxidized films of them are broken and metal bind occurs between newly-formed surfaces, so that it is possible to form the film with improved adhesion strength with the base body in which thermal resistance is inhibited.

Such deposition layer 12 is made of metal or an alloy having the excellent thermal conductivity such as copper and aluminum, for example.

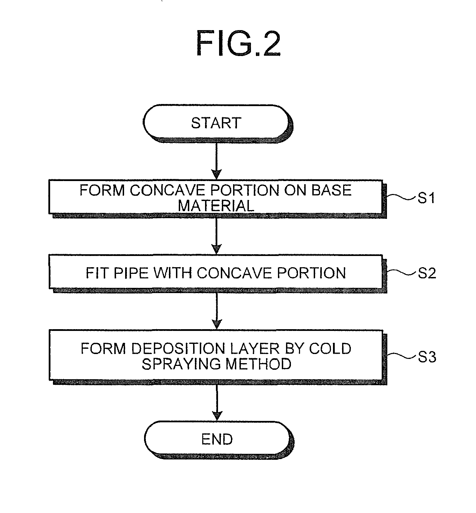

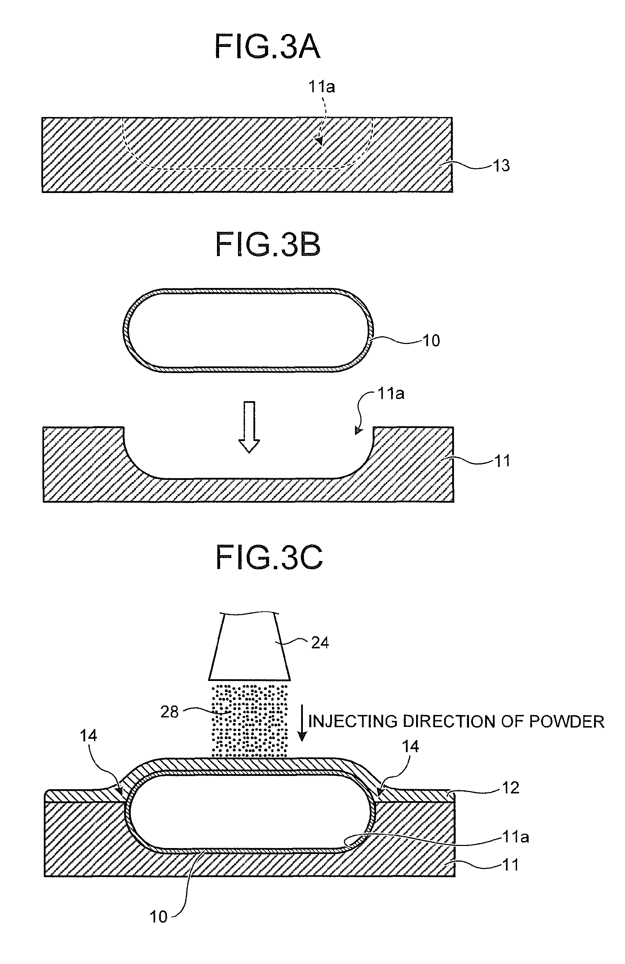

Next, a method of manufacturing the pipe buried structure 1 is described. FIG. 2 is a flowchart illustrating the method of manufacturing the pipe buried structure 1. FIGS. 3A to 3C are schematic diagrams illustrating the method of manufacturing the pipe buried structure 1.

First, at step S1, as illustrated in FIG. 3A, a groove-shaped concave portion 11a is formed by digging on a surface of a bulk material 13 made of metal or alloy to form the base material 11.

At subsequent step S2, as illustrated in FIG. 3B, the pipe 10 is fitted to the concave portion 11a.

Furthermore, at step S3, as illustrated in FIG. 3C, the deposition layer 12 is formed on the surfaces of the pipe 10 and the base material 11 by the cold spraying method.

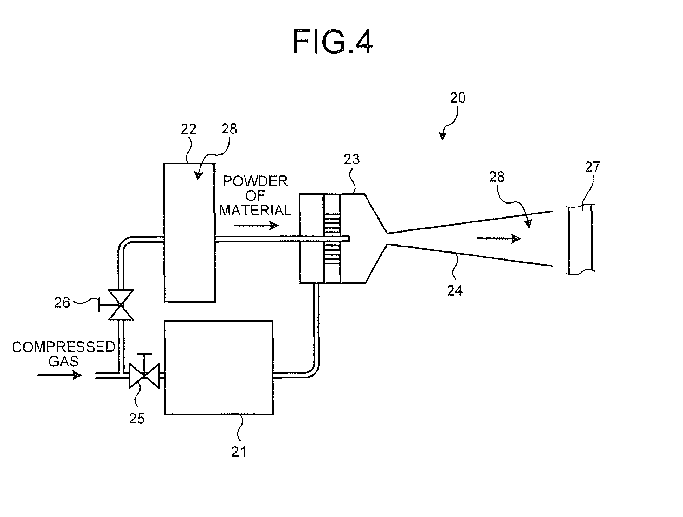

FIG. 4 is a schematic diagram illustrating an outline of the cold spraying device used at step S3. As illustrated in FIG. 4, a cold spraying device 20 is provided with a gas heater 21 which heats compressed gas, a powder supplying device 22 which accommodates powder of a material of the deposition layer 12 (hereinafter, also simply referred to as powder) 28 to supply to a spray gun 23, a gas nozzle 24 which injects the heated compressed gas and the powder 28 supplied thereto to a base body 27, and valves 25 and 26 which adjust supply amounts of the compressed gas to the gas heater 21 and to the powder supplying device 22, respectively.

Helium, nitrogen, air and the like are used as the compressed gas. The compressed gas supplied to the gas heater 21 is heated to temperatures in a range not lower than 50 degrees C and lower than a melting point of the powder 28, for example, to be supplied to the spray gun 23. Heating temperature of the compressed gas is preferably set to 300 to 900 degrees C. On the other hand, the compressed gas supplied to the powder supplying device 22 supplies the powder 28 in the powder supplying device 22 to the spray gun 23 at a predetermined discharge amount.

The heated compressed gas is made a supersonic flow (of approximately 340 m/s or higher) by the gas nozzle 24 having a divergent shape. A gas pressure of the compressed gas at that time is preferably set to approximately 1 to 5 MPa. It is possible to improve the adhesion strength of the powder (film) to the base body 27 by adjusting the pressure of the compressed gas to this level. A process at the pressure of approximately 2 to 4 MPa is more preferable. The powder 28 supplied to the spray gun 23 is accelerated by being injected to the supersonic flow of the compressed gas and collides with the base body 27 in the solid phase state at a high speed to be deposited. Meanwhile, the device is not limited to the cold spraying device 20 illustrated in FIG. 4 as long as this is the device capable of forming the film by allowing the powder 28 to collide with the base body 27 in the solid phase state.

In such cold spraying device 20, the base material 11 in which the pipe 10 is fitted to the concave portion 11a is arranged as the base body 27 and the film is formed on the surfaces of the pipe 10 and the base material 11. At that time, the powder 28 enters an area 14 between the vicinity of an upper end of the concave portion 11a and the pipe 10 to form the film.

The deposition layer 12 is formed to have a desired thickness in this manner, and the pipe buried structure 1 illustrated in FIG. 1 is completed. Meanwhile, as illustrated in FIG. 3C, a part of the pipe 10 is raised from the upper surface 11b of the base material, so that the deposition layer 12 also has a shape raised on the pipe 10. Therefore, it is preferred to form a thick deposition layer 12 and remove an unnecessary portion by cutting and the like to realize a flat surface.

Next, relationship between the cross section of the pipe 10 and the concave portion 11a provided on the base material 11 is described.

In the cold spraying method, in general, the powder 28 injected from the gas nozzle 24 in one direction collides with the base body 27 to form the film. Therefore, it is not possible to form the film in a portion in a shadow in the injecting direction of the powder 28. As a surface on which the film is formed becomes more parallel to the injecting direction of the powder 28, it becomes more difficult to form the film. Therefore, the inventors of the present application seriously perform experiments in order to obtain a condition for forming a minute and uniform deposition layer 12 on a side of the pipe 10, that is to say, in the vicinity of a boundary between the same and the base material 11 when forming the deposition layer 12 by the cold spraying method.

As a result, the inventors of the present application find that it is possible to form the minute and uniform deposition layer 12 closely adhered to the pipe 10 and the base material 11 by providing the concave portion 11a satisfying the following conditions (1) and (2) on the base material 11 when manufacturing the pipe buried structure 1 in which the pipe 10, an outer peripheral shape on the cross section of which is flattened, is buried.

(1) The ratio h/R between the protruding amount h by which the pipe 10 protrudes from the surface of the base material 11 and the curvature R of the outer periphery of the pipe 10 is set to be not smaller than 0.25 and not larger than 0.5.

(2) A clearance Δ between the concave portion 11a and the pipe 10 is set to be not smaller than 0 mm and not larger than 0.05 mm.

According to this embodiment, it becomes possible to form the minute and uniform deposition layer closely adhering to the pipe and the base material around the pipe by forming the concave portion defined by the above-described condition on the base material, fitting the pipe to the concave portion and forming the deposition layer by the cold spraying method. Therefore, when the pipe buried structure the adhesiveness of which is improved in this manner is used as the temperature adjusting device and the shower plate, it becomes possible to improve temperature adjusting efficiency by the excellent thermal conductivity and thermal uniformity. Meanwhile, in this case, a side of the deposition layer 12 is preferably used as a thermal conductive surface.

Examples

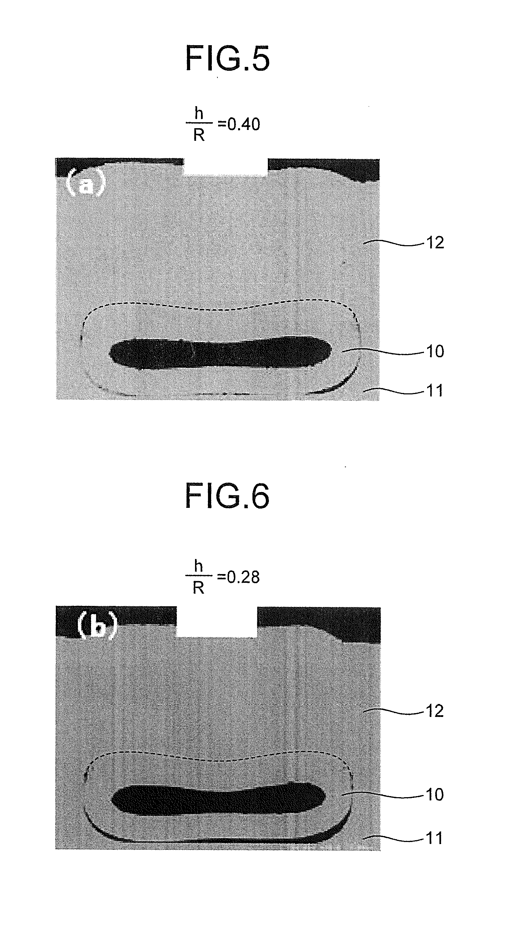

Hereinafter, examples and comparative examples are described with reference to FIGS. 5 to 11.

Examples 1 and 2 and comparative examples 1 and 2 are first described. FIGS. 5 to 8 are SEM images obtained by imaging a pipe 10, a base material 11, and a deposition layer 12 in cases in which the deposition layer 12 is formed with different ratios h/R in a direction orthogonal to a cross section of the pipe 10. Meanwhile, in FIGS. 5 to 8, a part of an outer diameter of the pipe is supplemented by a broken line.

In examples 1 and 2 and comparative examples 1 and 2, a sample was formed of following materials under following conditions.

Base material: 50 mm x 50 mm copper alloy plate 10 mm thick
Pipe: copper alloy of
width $w_1$ in longitudinal direction = 8.2 mm,
width $w_2$ in lateral direction = 2.5 mm, and
curvature R of outer periphery = 1.25 mm
Material of deposition layer: copper powder with mean particle size of 26.18 μm
Clearance between concave portion provided on base material and pipe: Δ = 0 mm

(Example 1)

A ratio h/R was set to 0.40. As a result, as illustrated in FIG. 5, a minute and uniform deposition layer 12 with a sufficient thickness was formed also on a side of a pipe 10.

(Example 2)

A ratio h/R was set to 0.28. As a result, as illustrated in FIG. 6, a minute and uniform deposition layer 12 with a sufficient thickness was formed also on a side of a pipe 10.

(Comparative Example 1)

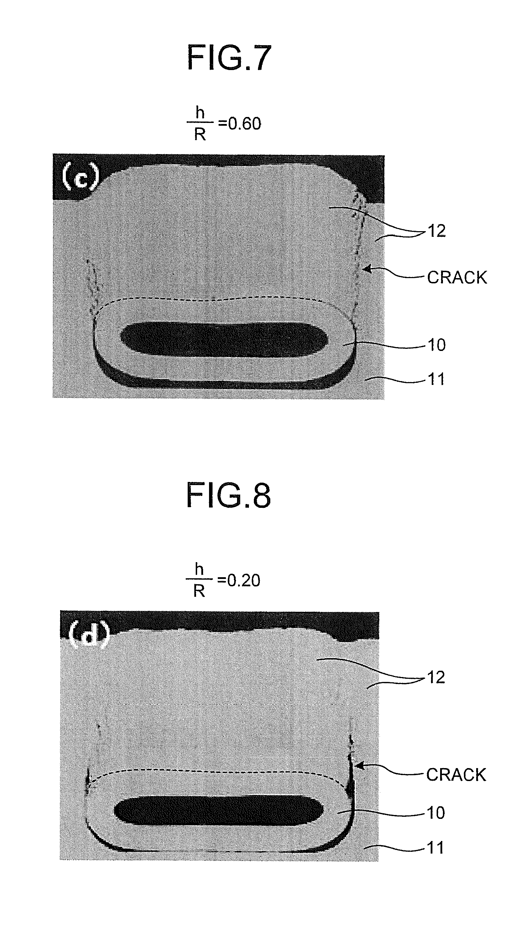

A ratio h/R was set to 0.60. In this case, as illustrated in FIG. 7, a sufficient deposition layer 12 could not be formed on a side of a pipe 10. Therefore, the deposition layer 12 could not be formed in a gap, so that the deposition layer 12 formed on the pipe 10 and the deposition layer 12 formed on a base material 11 were separated.

(Comparative Example 2)

A ratio h/R was set to 0.20. In this case, as illustrated in FIG. 8, a sufficient deposition layer 12 could not be formed on a side of a pipe 10. This may be because a depth of an inner wall portion of a concave portion 11a on which the deposition layer 12 should be formed, that is to say, a portion parallel to an injecting direction of powder 28 (refer to FIG. 3C) was too deep as compared to that of Examples 1 and 2. Therefore, a crack appeared between the deposition layer 12 formed on the pipe 10 and the deposition layer 12 formed on a base material 11.

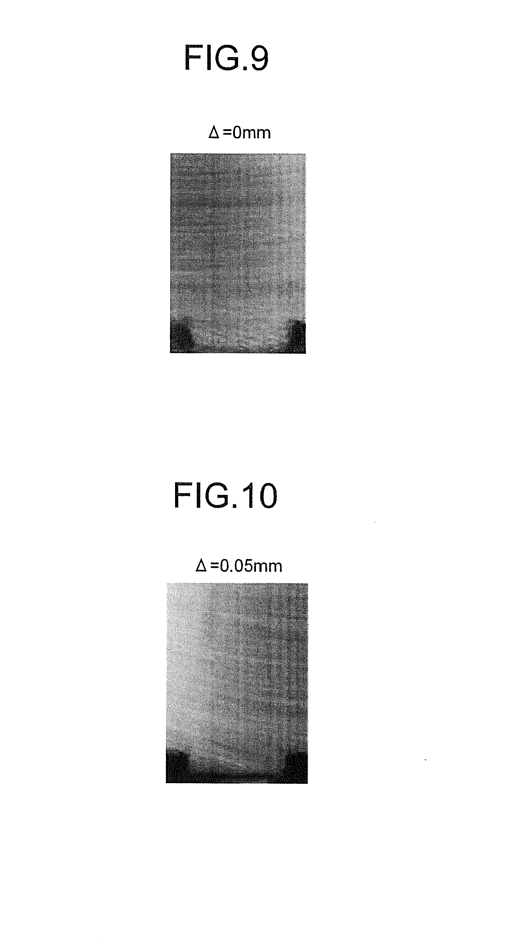

Next, examples 3 and 4 and a comparative example 3 are described. FIGS. 9 to 11 are optical photographs illustrating a deposition layer 12 in cases in which a clearance $\Delta$ between a concave portion 11a and a pipe 10 is changed. The optical photographs are obtained by imaging a ground surface from above, the surface obtained by sufficiently forming the deposition layer 12 on the pipe 10 (so as to be higher than an upper end face of the pipe 10 by more than 1 mm), then cutting the deposition layer 12 at the height of 1 mm from the upper end face of the pipe 10 by milling, and further grinding the same.

In examples 3 and 4 and comparative example 3, a sample was formed of following materials under following conditions.

> Base material: 40 mm x 40 mm copper alloy plate 10 mm thick
> Pipe: copper alloy of
> width $w_1$ in longitudinal direction = 8.2 mm,
> width $w_2$ in lateral direction = 2.5 mm, and
> curvature R of outer periphery = 1.25 mm
> Material of deposition layer: copper powder with mean particle size of 26.18 $\mu$m

$$\text{Ratio } h/R = 0.4$$

(Comparative Example 3)

A clearance $\Delta$ was set to 0 mm. As a result, as illustrated in FIG. 9, a minute and uniform deposition layer 12 smoothly continuing between an area on a pipe 10 and an area on a base material 11 was formed.

(Example 4)

A clearance $\Delta$ was set to 0.05 mm. As a result, as illustrated in FIG. 10, a minute and uniform deposition layer 12 continuing between an area on a pipe 10 and an area on a base material 11 was formed, although a slight boundary line of planes was observed between them.

(Comparative Example 3)

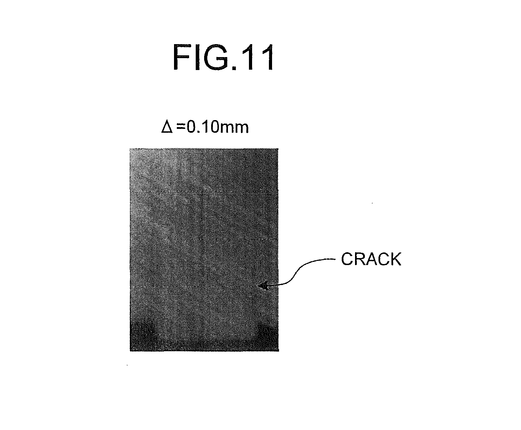

A clearance $\Delta$ was set to 0.10 mm. In this case, as illustrated in FIG. 11, a crack was observed between an area on a pipe 10 and an area on a base material 11.

Reference Signs List

| | |
|---|---|
| 1 | pipe buried structure |
| 10 | pipe |
| 10a, 10b | end |
| 10c, 10d | outer peripheral portion in longitudinal direction |
| 11 | base material |
| 11a | concave portion |
| 11b | upper surface |
| 12 | deposition layer |
| 13 | bulk material |
| 14 | area |
| 20 | cold spraying device |
| 21 | gas heater |
| 22 | powder supplying device |
| 23 | spray gun |
| 24 | gas nozzle |
| 25, 26 | valve |
| 27 | base material |
| 28 | powder |

**Claims**

1.  A pipe buried structure comprising:

    a pipe made of metal or alloy, an outer periphery on a cross section of the pipe having a flattened shape obtained by curving both ends in a longitudinal direction;
    a base material made of metal or alloy comprising a concave portion to which the pipe is fitted, the concave portion having an inner wall which abuts a portion corresponding to the longitudinal direction of the outer periphery; and
    a deposition layer formed by accelerating powder made of metal or alloy together with gas to spray and deposit the powder in a solid phase state on surfaces of the pipe and the base material in a state in which the pipe is fitted to the concave portion, wherein
    a ratio h/R between a protruding amount h by which the pipe protrudes from the surface of the base material and a curvature R at the both ends is not smaller than 0.25 and not larger than 0.5.

2. The pipe buried structure according to claim 1, wherein a clearance between the concave portion and the pipe on the cross section is not smaller than 0 mm and not larger than 0.05 mm.

3. The pipe buried structure according to claim 1 or 2, wherein the pipe is made of stainless steel, a copper alloy, a nickel alloy, tantalum, niobium, titanium, aluminum, or an aluminum alloy.

4. The pipe buried structure according to any one of claims 1 to 3, wherein the base material is made of copper, a copper alloy, aluminum or an aluminum alloy.

5. The pipe buried structure according to claim 4, wherein the powder is made of copper or aluminum.

6. A method of manufacturing a pipe buried structure comprising:

a base material forming step of forming a concave portion on a base material made of metal or alloy, the concave portion comprising an inner wall which abuts a portion corresponding to a longitudinal direction of an outer periphery of a pipe made of metal or alloy, the outer periphery on a cross section of the pipe having a flattened shape obtained by curving both ends in the longitudinal direction; and
a deposition layer forming step of fitting the pipe to the concave portion, accelerating powder made of metal or alloy together with gas, and forming a deposition layer by spraying and depositing the powder in a solid phase state on surfaces of the pipe and the base material, wherein
the base material forming step sets a ratio h/R between a protruding amount h by which the pipe protrudes from the surface of the base material and a curvature R at the both ends to be not smaller than 0.25 and not larger than 0.5.

7. The method of manufacturing a pipe buried structure according to claim 6, wherein the base material forming step sets a clearance between the concave portion and the pipe on the cross section of the pipe to be not smaller than 0 mm and not larger than 0.05 mm.

# FIG.1

EP 2 871 261 A1

# FIG.2

START

FORM CONCAVE PORTION ON BASE MATERIAL — S1

FIT PIPE WITH CONCAVE PORTION — S2

FORM DEPOSITION LAYER BY COLD SPRAYING METHOD — S3

END

# FIG.3A

11a

13

# FIG.3B

10

11a

11

# FIG.3C

24

28

INJECTING DIRECTION OF POWDER

14

14

12

11a

10

11

# FIG.4

# FIG.5

$$\frac{h}{R} = 0.40$$

(a)

12

10

11

# FIG.6

$$\frac{h}{R} = 0.28$$

(b)

12

10

11

# FIG.7

$$\frac{h}{R} = 0.60$$

# FIG.8

$$\frac{h}{R} = 0.20$$

# FIG.9

Δ=0mm

# FIG.10

Δ=0.05mm

# FIG.11

Δ =0.10mm

CRACK

## INTERNATIONAL SEARCH REPORT

| International application No. |
|---|
| PCT/JP2013/068078 |

**A. CLASSIFICATION OF SUBJECT MATTER**
*C23C24/04*(2006.01)i, *F16L1/00*(2006.01)i

According to International Patent Classification (IPC) or to both national classification and IPC

**B. FIELDS SEARCHED**

Minimum documentation searched (classification system followed by classification symbols)
C23C24/04, F16L1/00

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-238705 A (NHK Spring Co., Ltd.), 24 November 2011 (24.11.2011), entire text & US 2013/0056187 A1 & EP 2568497 A & WO 2011/138899 A1 & CN 102884620 A | 1-7 |
| A | JP 2009-083429 A (Kanto Auto Works, Ltd.), 23 April 2009 (23.04.2009), entire text (Family: none) | 1-7 |

[×] Further documents are listed in the continuation of Box C.     [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 July, 2013 (26.07.13) | 06 August, 2013 (06.08.13) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/068078

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-510599 A  (Mold Masters Ltd.),<br>08 April 2004 (08.04.2004),<br>entire text<br>& US 2004/0011495 A1     & US 2006/0243412 A1<br>& EP 1283768 A          & WO 2002/028615 A1<br>& DE 10025588 A         & DE 10025588 A1<br>& AU 8616701 A          & CN 1430549 A | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009013497 A
- JP 2011238705 A